# EUROPEAN PATENT APPLICATION

(11) **EP 2 554 272 A1**
(43) Date of publication of application: **06.02.2013**
(21) Application number: 11765424.4
(22) Date of filing: 24.03.2011
(51) Int. Cl.: B05B 5/043, B05B 17/04, C02F 1/48

(54) **ELECTROSTATIC ATOMIZATION DEVICE**

(30) Priority: 01.04.2010 JP 2010085321
(71) Applicant: Panasonic Corporation, Kadoma-shi Osaka 571-8501 (JP)
(72) Inventor: MACHI, Masaharu, Osaka 540-6207 (JP); YAMAUCHI, Toshiyuki, Osaka 540-6207 (JP); SUDA, Hiroshi, Osaka 540-6207 (JP); ISHIGAMI, Youhei, Osaka 540-6207 (JP)
(74) Representative: Grünecker, Kinkeldey, Stockmair & Schwanhäusser
(86) International application number: PCT/JP2011/057221
(87) International publication number: WO 2011/125523

(57) **Abstract**

An electrostatic atomizer comprises an atomization unit provided with a microstrip line having first and second ends, a microwave input unit configured to input a microwave signal to the first end, and a liquid supply means configured to supply liquid to the second end side. Consequently, the emission of ozone with charged particulate water containing an active ingredient can be suppressed while the amount of generation of the charged particulate water is ensured.

## Description

### Technical Field

The invention relates to an electrostatic atomizer.

### Background Art

An electrostatic atomizer capable of producing charged particulate water containing active constituents such as radicals has been conventionally known. In the electrostatic atomizer, a voltage applying unit is connected to a needle-shaped atomization unit, and a high voltage is applied to the atomization unit holding liquid, and thereby the liquid is electrostatically atomized, so that charged particulate water is generated (see e.g., Japanese Patent Application Publication Number 2006-272092 or the like).

In case the electrostatic atomizer produces a large amount of charged particulate water containing the active constituents, a large energy in response to the amount is to be given to the atomization unit.

As presented above, when a conventional electrostatic atomizer produces a large amount of charged particulate water, it is necessary to supply a large energy to the atomization unit in response to the amount. Accordingly, a large amount of ozone is generated due to a discharge phenomenon that occurs at the same time as an electrostatic atomization phenomenon in the atomization unit, and is emitted to the outside along with the charged particulate water. On the other hand, if an energy given to the atomization unit is decreased in order to suppress an occurrence of ozone, it becomes difficult to ensure an amount of charged particulate water to be produced.

### Summary of Invention

The present invention is provided in view of the aforementioned problem, and an object is to provide an electrostatic atomizer capable of suppressing emission of ozone along with charged particulate water comprising an active constituent while ensuring an amount of the charged particulate water to be produced.

An electrostatic atomizer of the present invention solves the problem by comprising the following configuration.

An electrostatic atomizer of the present invention comprises an atomization unit, a microwave input unit and a microwave input unit. The atomization unit comprises a microstrip line having first and second ends. The microwave input unit is configured to input a microwave signal to said first end. The liquid supply means is configured to supply liquid to a side of said second end.

In an embodiment, the electrostatic atomizer is configured to apply a voltage to the liquid held by the atomization unit, thereby generating the charged particulate water from the liquid. The atomization unit is an unit, in which a dielectric body is intervened between strip and earth conductors, constituting the microstrip line. The strip conductor of the microstrip line is provided from a side of one end to a side of other end of the atomization unit. And the electrostatic atomizer of the embodiment is provided with: the microwave input unit configured to input the microwave signal to the first end of the microstrip line in said side of one end of the atomization unit; and the liquid supply means is configured to supply the liquid to the second end of the microstrip line in said side of other end of the atomization unit, and

Preferably, an electrostatic atomizer of an embodiment comprises, as the liquid supply means, a cooling unit configured to cool the dielectric body to produce dew condensation water.

Preferably, an electrostatic atomizer of an embodiment comprises: an atomization unit cover positioned to surround the atomization unit; and a cooling unit configured to cool the atomization unit cover.

Preferably, an electrostatic atomizer of an embodiment comprises: a tubular unit through which the charged particulate water produced at the atomization unit can pass; and a temperature varying means configured to cool and then heat the tubular unit.

Preferably, an electrostatic atomizer of an embodiment comprises an ultraviolet irradiating unit configured to irradiate ultraviolet rays toward the atomization unit.

Preferably, the ultraviolet rays have 310 nm or less wavelength.

Preferably, the ultraviolet rays include at least 254 nm wavelength.

Preferably, the ultraviolet rays further include 185 nm wavelength.

Preferably, the ultraviolet rays include at least 193 nm wavelength.

The present invention has an advantage capable of suppressing emission of ozone along with charged particulate water comprising an active ingredient while ensuring an amount of the charged particulate water to be produced.

### Brief Description of Drawings

Preferred embodiments of the invention will now be described in further details. Other features and advantages of the present invention will become better understood with regard to the following detailed description and accompanying drawings where:

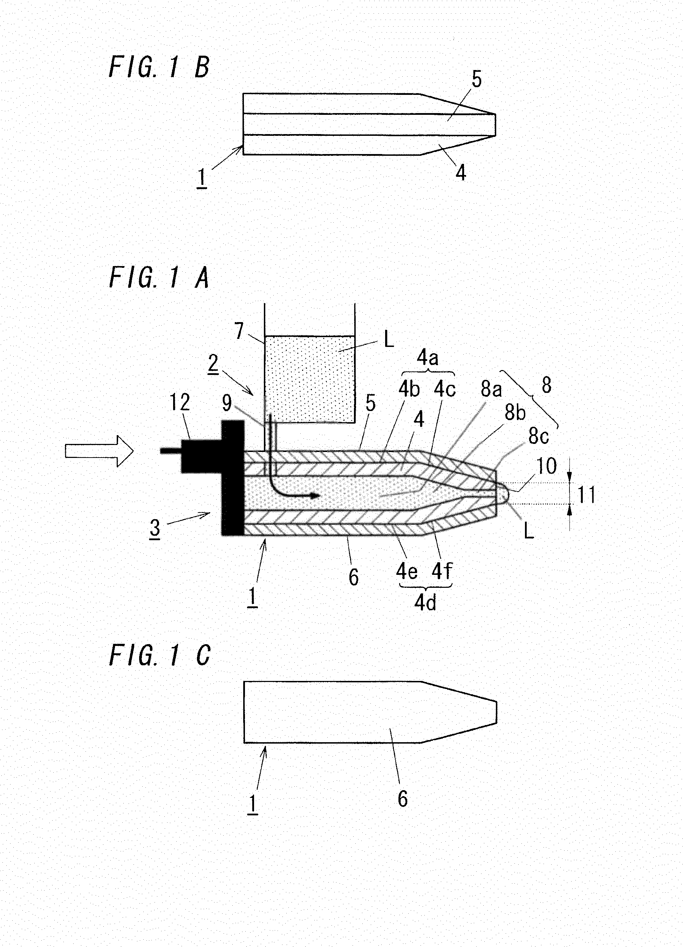

FIG. 1 shows an essential part of an electrostatic atomizer in accordance with a first embodiment of the present invention, FIG. 1A is an explanatory sectional view showing a basic configuration around an atomization unit, FIG. 1B is an explanatory diagram of the atomization unit as seen from a side of a strip conductor in a microstrip line, and FIG. 1C is an explanatory diagram of the atomization unit as seen from a side of an earth conductor;

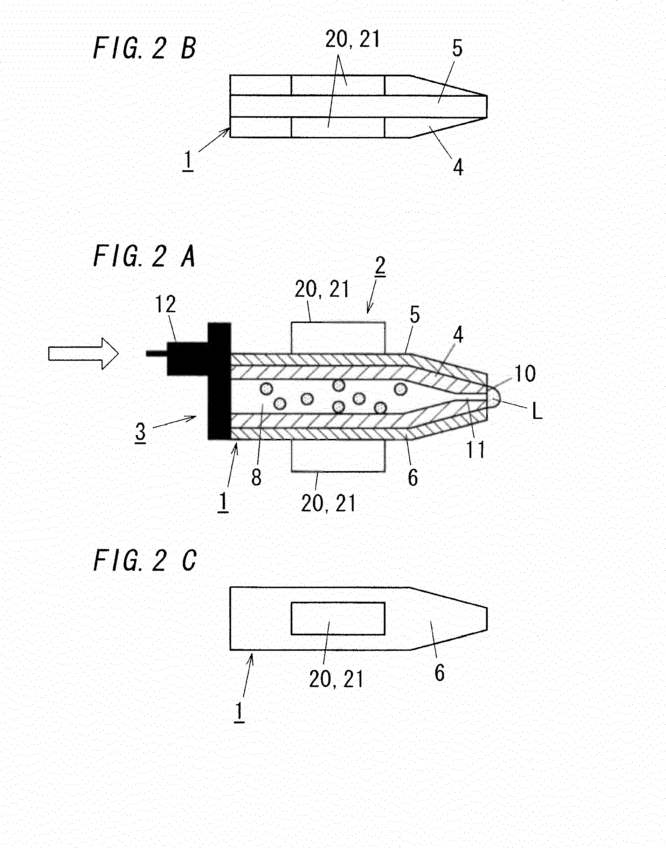

FIG. 2 shows an essential part of an electrostatic atomizer in accordance with a second embodiment of the present invention, FIG. 2A is an explanatory sectional view showing a basic configuration around an atomization unit, FIG. 2B is an explanatory diagram of the atomization unit as seen from a side of a strip conductor in a microstrip line, and FIG. 2C is an explanatory diagram of the atomization unit as seen from a side of an earth conductor;

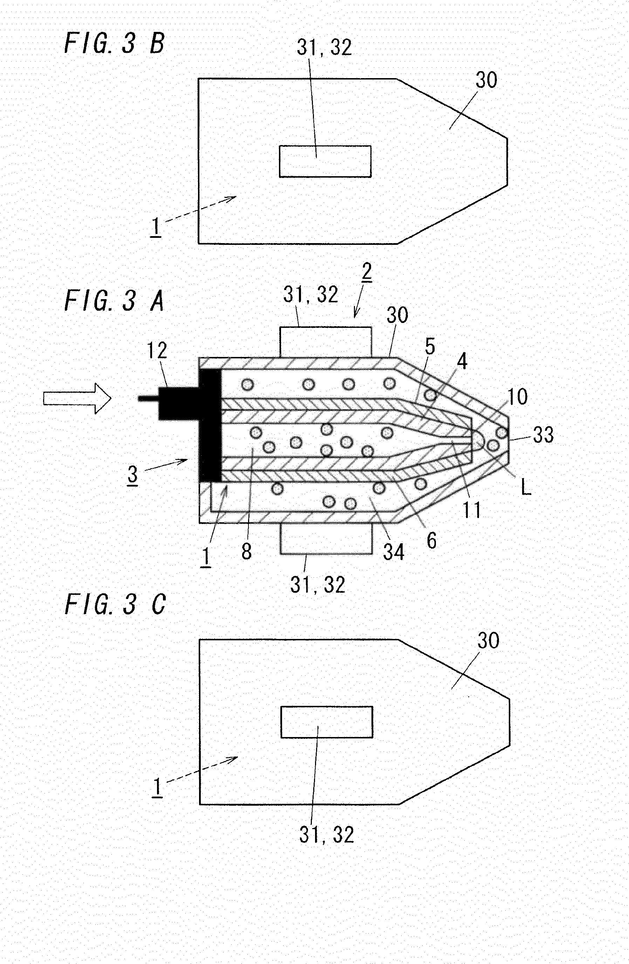

FIG. 3 shows an essential part of an electrostatic atomizer in accordance with a third embodiment of the present invention, FIG. 3A is an explanatory sectional view showing a basic configuration around an atomization unit, FIG. 3B is an explanatory diagram of the atomization unit as seen from a side of a strip conductor in a microstrip line, and FIG. 3C is an explanatory diagram of the atomization unit as seen from a side of an earth conductor;

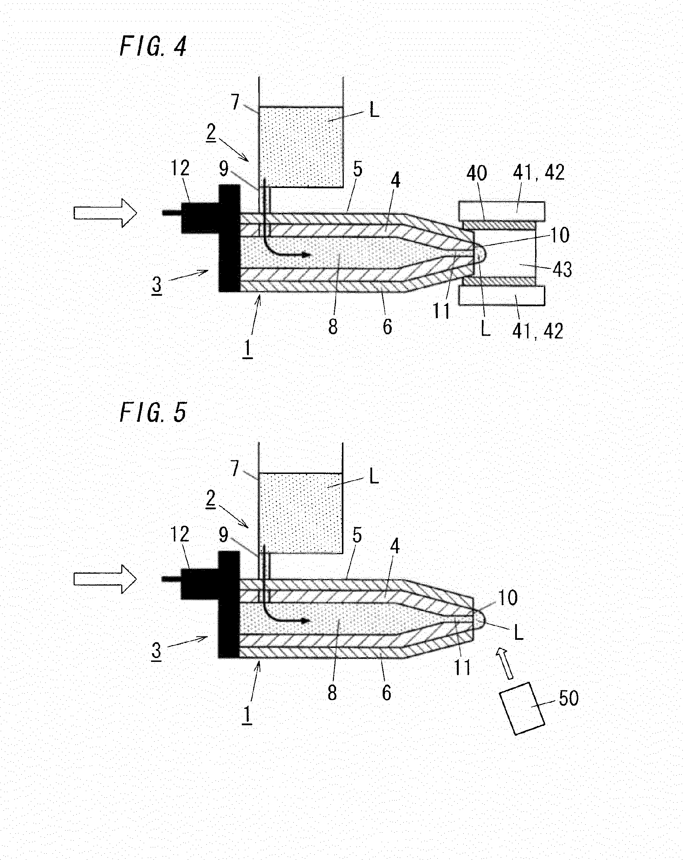

FIG. 4 is an explanatory sectional view showing a basic configuration around an atomization unit of an electrostatic atomizer in accordance with a fourth embodiment of the present invention; and
FIG. 5 is an explanatory sectional view showing a basic configuration around an atomization unit of an electrostatic atomizer in accordance with a fifth embodiment of the present invention;

### Description of Embodiments

The present invention is explained with reference to embodiments shown in accompanying drawings.

### (FIRST EMBODIMENT)

FIG. 1 shows a schematic basic configuration of an electrostatic atomizer in accordance with a first embodiment of the present invention. The electrostatic atomizer of the embodiment is configured to apply a voltage (a microwave electric field) to liquid (L) held by an atomization unit 1, thereby generating charged particulate water from the liquid (L). The electrostatic atomizer of the embodiment comprises a liquid supply means 2 configured to supply liquid (L) to the atomization unit 1, and a voltage applying means 3 configured to apply a locally strong voltage (a microwave electric field) to a part, for holding the liquid (L), of the atomization unit 1.

The atomization unit 1 includes a microstrip line having first and second ends. Typically, the microstrip line is formed of a dielectric body having first and second surfaces, a strip conductor that is in contact with the first surface of the dielectric body, and a ground plane conductor that is in contact with the second surface of the dielectric body. The ground plane conductor is hereinafter referred to as an "earth conductor". In the embodiment, the atomization unit 1 has a tapered tubular or hollow dielectric body 4 in which a diameter of its own one end (second end) side is smaller than that of its own other end (first end) side, wherein the first end is hereinafter referred to as a "base side" and the second end is hereinafter referred to as a "tip side". The dielectric body 4 is provided, on its own outer circumference, with a strip conductor 5 and an earth conductor 6 of a microstrip line so that the conductors are spaced. The strip conductor 5 and the earth conductor 6 of the microstrip line are placed at opposite sides of the dielectric body 4, respectively so that the dielectric body 4 is intervened between the strip conductor 5 and the earth conductor 6 of the microstrip line from both sides.

In an example of FIG. 1A, the dielectric body 4 is in the shape of a hollow flat, and has an internal space 8, a first surface (a superior surface) 4a and a second surface (an inferior surface) 4d. The internal space 8 is formed of: a tubular hollow portion (e.g., a cylindrical hollow portion) extended from the first end to second end side of the dielectric body 4; a discharge spout 8c that has a diameter smaller than that of the hollow portion 8a and is placed at the second end side; and a cone hollow portion 8b joined between the hollow potions (8a and 8c). The first surface 4a is formed of a base face 4b extending from the first end to the second end side of the dielectric body 4 and a tip face 4c extending from the tip of the base face 4b to the second end of the dielectric body 4. Similarly, the second surface 4d is formed of a base face 4e extending from the first end to the second end side of the dielectric body 4 and a tip face 4c extending from the tip of the base face 4e to the second end of the dielectric body 4. Each of the base faces (4b and 4a) is in the shape of a rectangle and the base faces are in parallel with each other. Each of the tip faces (4c and 4f) is in the shape of a trapezoid or a triangle of which lower base or base is in contact with a corresponding base face, and the tip faces are inclined planes of which tips approach each other. The strip conductor 5 is in contact with a part of the first surface 4a of the dielectric body 4 (a part, in a longitudinal direction, of the first surface 4a), while the earth conductor 6 is in contact with all or part of the second surface 4d of the dielectric body 4. Specifically, the strip conductor 5 of the microstrip line is located in a linear fashion from the base side (first end) to the tip side (second end) in one surface (first surface) of the dielectric body 4 forming the atomization unit 1. The earth conductor 6 is arranged to cover the whole or almost the whole from the base side to the tip side in other surface (the opposite surface of the one surface) of the dielectric body 4 forming the atomization unit 1. A conductor having a high conductive property may be arbitrarily applied to each of the strip and earth conductors 5 and 6 of the microstrip line. An arrangement such that the internal space 8 of the dielectric body 4 is sandwiched may be arbitrarily applied to an arrangement of the strip and earth conductors 5 and 6 of the microstrip line.

The liquid supply means 2 has a liquid storage tank 7 for storing liquid (L) for atomization, and a carrier channel 9 for sequentially conveying the liquid (L) in the liquid storage tank 7 to the internal space 8 of the dielectric body 4. The carrier channel 9 is formed of, for example, a porous carrier member capable of conveying the liquid (L) by capillary movement. The internal space 8 has a pore shaped discharge spout 8c having an opening at an apical surface 10 of the dielectric body 4, and is configured to supply the liquid (L) in the internal space 8 to the apical surface 10 by capillary movement through the discharge spout 8c. That is, the discharge spout 8c is a capillary pore space.

The voltage applying means 3 comprises a microwave input unit 12 configured to input a microwave signal to the base side of the atomization unit 1, namely the first end of the microstrip line (specifically, between the strip and earth conductors 5 and 6 in the first end). The microwave input unit 12 is configured to apply a voltage at a frequency of microwave order to the base side (first end) of the dielectric body 4 that is intervened between the strip and earth conductors 5 and 6, which constitute the microstrip line (see an outline arrow in the figure). Accordingly, microwaves are transmitted from the base side to the tip side of the atomization unit 1 along the strip conductor 5 of the microstrip line, and a microwave electric field locally concentrates at an apical part having an aperture 11 between the conductors (5 and 6), so that plasma (a dielectric-barrier discharge) occurs. And charged particulate water is produced by occurrence of an electrostatic atomization phenomenon of the liquid (L) under a discharge obtained by locally applying a high electric field to the liquid (L) held at the aforementioned apical part. In this instance, large amounts of OH radicals are produced by a reaction of O. generated by the discharge and a water. A surface discharge can be also occurred at the aperture 11 by a low-power. Large amounts of radicals can be discharged by supplying a water from the discharge spout 8c to the apical surface 10.

As referred to above, in the electrostatic atomizer of the embodiment, the atomization unit 1 is an unit, in which the dielectric body 4 is intervened between the strip and earth conductors 5 and 6, constituting the microstrip line. The strip conductor 5 of the microstrip line is provided from the base side to the tip side of the atomization unit 1. The microwave input unit 12 configured to input a microwave signal to the base side of the atomization unit 1, i.e., the first end of the microstrip line, and the liquid supply means 2 configured to supply liquid (L) to the tip side of the atomization unit 1 are provided.

Therefore, if a microwave signal is input from the base side of the atomization unit 1 (the first end of the microstrip line), microwaves transmitted to the tip side of the atomization unit 1 along the strip conductor 5 of the microstrip line concentrate locally, and a high electric field is locally applied to the liquid (L) held by the tip side of the atomization unit 1. Thereby, a discharge occurs. That is, an electric field can be locally concentrated at a part of the atomization unit 1 where liquid (L) is held, and accordingly the liquid (L) can be electrostatically atomized without a large energy with respect to the atomization unit 1. Therefore, it is possible to suppress a discharge phenomenon causing ozone generation and to reduce the occurrence and emission of ozone while ensuring a production amount of charged particulate water.

### (SECOND EMBODIMENT)

An electrostatic atomizer in accordance with a second embodiment of the present invention is next explained with reference to FIG. 2. The basic configuration of the example is the same as that of the first embodiment, and accordingly only the characteristic configuration of the present embodiment is described in detail and the same configuration as the first embodiment is not described in detail.

The electrostatic atomizer in the embodiment is provided, as the liquid supply means 2 for supplying liquid (L) up to the tip side of the atomization unit 1 (i.e., a focus area of microwave electric field), with a cooling unit 20 configured to cool a tubular or hollow shaped dielectric body 4 forming the atomization unit 1. The cooling unit 20 comprises a Peltier unit 21 of which heat absorption side is a side connected to the dielectric body 4, and is configured to produce dew condensation water by cooling the tubular or hollow shaped dielectric body 4 itself to form a space having a relatively high humidity in the internal space 8 of the dielectric body 4. The dew condensation water produced in the internal space 8 is supplied up to the apical surface 10 of the dielectric body 4 by capillary movement through the pore shaped discharge spout 8c. The dew condensation water becomes liquid (L) held for electrostatic atomization.

The Peltier unit 21 is in contact with one surface (a first surface) of the dielectric body 4 on which the strip conductor 5 of the microstrip line is mounted, and other surface (a second surface) of the dielectric body 4 on which the earth conductor 6 is mounted, respectively. In said one surface (the first surface) of the dielectric body 4, a pair of Peltier units 21 is located at both sides between which the strip conductor 5 of the microstrip line is intervened (see FIG. 2B). In said other surface (the second surface) of the dielectric body 4, one Peltier unit 21 is located on the earth conductor 6 (see FIG. 2C). In short, the liquid supply means 2 includes first and second Peltier units located on a first surface of the dielectric body 4, corresponding to both sides of the center of the strip conductor 5, and a third Peltier unit located on a second surface of the dielectric body 4 through the earth conductor 6. However, the arrangement of the Peltier units 21 is not limited to the example. Other arrangement may be applied as long as dew formation can be obtained by cooling the dielectric body 4. In an example, the atomization unit 1 is located with its own second end (the aperture 11) side down, and the dew condensation water produced in the internal space 8 passes through the discharge spout 8c and is then held on the apical surface 10 by a surface tension. In other words, the atomization unit 1 is located with its own first end side up. Thereby, the dew condensation water produced in the internal space 8 can be supplied to the apical surface 10 of the atomization unit 1. In the example, it is preferable that the atomization unit 1 should have a vent which allows a gas (an air) to pass though the internal space 8, at the same position as the carrier channel 9 of the first embodiment (the first end side of the atomization unit 1). An inside dimension of the discharge spout 8c (e.g., a diameter) is also set so that dew condensation water which has passed through the discharge spout 8c is held on the apical surface 10 by a surface tension.

As presented above, the electrostatic atomizer of the embodiment has, as the liquid supply means 2, the cooling unit 20 configured to produce dew condensation water by cooling the dielectric body 4, and accordingly can continuously supply liquid (L) for electrostatic atomization based on moisture in the air without additional liquid storage tank 7 and carrier channel 9 like the first embodiment.

Moreover, the cooled dielectric body's (4) internal space 8 becomes a space having a high humidity, and accordingly a tip part of the dielectric body 4 where ozone is produced is kept in a high humidity through the discharge spout 8c. Therefore, produced ozone is further reduced by dissolution into moisture in the air

### (THIRD EMBODIMENT)

An electrostatic atomizer in accordance with a third embodiment of the present invention is next explained with reference to FIG. 3. The basic configuration of the embodiment is the same as those of the first and second embodiments, and accordingly only the characteristic configuration of the present embodiment is described in detail and the same configuration as the first and second embodiments is not described in detail.

The electrostatic atomizer in the embodiment is provided, as the liquid supply means 2 for supplying liquid (L) up to the tip side of the atomization unit 1 (i.e., a focus area of microwave electric field), with a tubular or hollow shaped atomization unit cover 30 positioned to surround the atomization unit 1, and a cooling unit 31 configured to cool the atomization unit cover 30. The atomization unit cover 30 is made of a material having a high heat conductivity. The cooling unit 31 comprises a Peltier unit 32 of which heat absorption side is a side connected to the atomization unit cover 30. In an example, the atomization unit 1 is located with its own second end (the aperture 11) down, and the dew condensation water produced in the internal space 8 passes through the discharge spout 8c and is then held on the apical surface 10 by a surface tension. In this example, it is preferable that the atomization unit 1 and the atomization unit cover 30 have vents, which allow a gas (an air) to pass through the internal space 8 and the atomization unit cover 30, at the same position as the carrier channel 9 of the first embodiment (the first end side of the atomization unit 1).

The atomization unit cover 30 is a tubular or hollow shaped unit that has a discharge hole 33 at a position facing the tip side of the atomization unit 1, and forms a space 34 between the cover and the tubular or hollow shaped dielectric body 4.

If the atomization unit cover 30 is cooled with the Peltier units 32, the atomization unit cover 30 is cooled and then dew formation occurs, and the dielectric body 4 surrounded by the atomization unit cover 30 is also cooled and then dew formation occurs. In addition, the space 34 in the atomization unit cover 30 becomes a space having a high humidity, and the internal space 8 of the dielectric body 4 surrounded by the atomization unit cover 30 becomes a space having a high humidity as well.

The dew condensation water produced in the internal space 8 is supplied up to the apical surface 10 of the dielectric body 4 by capillary movement through the pore shaped discharge spout 8c. The dew condensation water produced in the space 34 is also supplied up to the apical surface 10 of the dielectric body 4. The dew condensation water becomes liquid (L) for electrostatic atomization.

A pair of Peltier units 32 is provided at opposite sides of an outer circumference of the atomization unit cover 30, but other arrangement may be employed as long as the atomization unit cover 30 can be cooled effectively.

As presented above, the electrostatic atomizer of the embodiment has the atomization unit cover 30 positioned to surround the atomization unit 1 and the cooling unit 31 for cooling the atomization unit cover 30, and accordingly cools the atomization unit cover 30 through the cooling unit 31, thereby setting the space 34 between the atomization unit cover 30 and the atomization unit 1 to a high-humidity space. Accordingly, a tip part of the atomization unit 1 where ozone is produced is kept in a high humidity, and the produced ozone is easily dissolved in moisture in the air, thereby further supressing emission of ozone.

The atomization unit cover 30 and the cooling unit 31 are also employed as the liquid supply means 2, and accordingly the structure without additional liquid storage tank 7 and carrier channel 9 like the first embodiment is obtained. However, the liquid supply means 2 may be the same configuration as that in the first embodiment.

### (FOURTH EMBODIMENT)

An electrostatic atomizer in accordance with a fourth embodiment of the present invention is next explained with reference to FIG. 4. The basic configuration of the embodiment is the same as that of the first embodiment, and accordingly only the characteristic configuration of the present embodiment is described in detail and the same configuration as the first embodiment is not described in detail.

The electrostatic atomizer in the present embodiment is provided with a tubular unit 40 through which charged particulate water produced at the tip side of the atomization unit 1 can pass. The tubular unit 40 of which both ends are pierced is formed of a material having a high heat conductivity. In the embodiment, the tip part of the atomization unit 1 (i.e., a part where liquid (L) for electrostatic atomization is held) is inserted into an opening, at one end side, of the tubular unit 40. In the structure that charged particulate water can pass through the tubular unit 40, the tubular unit 40 may be somewhat apart from the atomization unit 1.

Peltier units 42 as a temperature varying means 41 capable of cooling and heating the tubular unit 40 are connected to an outer circumference of the tubular unit 40. Peltier unit 42 is a heat exchanger having heat absorption and radiation sides, and switchable so that the side connected to the tubular unit 40 becomes the heat absorption side or the radiation side by changing an energizing direction of built-in peltiert devices (not shown). The embodiment is provided with a control unit (not shown) configured to cool and then heat the tubular unit 40 by controlling energization of the Peltier units 42.

As presented above, the electrostatic atomizer of the embodiment comprises the tubular unit 40 through which charged particulate water produced with the atomization unit 1 can pass, and the temperature varying means 41 configured to cool and then heat the tubular unit 40. Therefore, if the tubular unit 40 is cooled through the Peltier units 42 constituting the temperature varying means 41, dew condensation water is produced in the internal space 43. The tubular unit 40 is then heated with the Peltier units 42. Accordingly, the internal space 43 can be provided as a high-humidity space having a high absolute humidity. If the atomization unit 1 produces charged particulate water with the internal space 43 of the tubular unit 40 set to the high-humidity space, ozone produced along with the charged particulate water is easily dissolved in moisture in the air while passing through the tubular unit 40. Therefore, an emission volume of ozone can be further suppressed.

The temperature varying means 41 needs to cool and then heat the tubular unit 40, but may separately comprise a cooling unit for cooling the tubular unit 40 and a heating unit for heating the tubular unit 40.

### (FIFTH EMBODIMENT)

An electrostatic atomizer in accordance with a fifth embodiment of the present invention is next explained with reference to FIG. 5. The basic configuration of the embodiment is the same as that of the first embodiment, and accordingly only the characteristic configuration of the present embodiment is described in detail and the same configuration as the first embodiment is not described in detail.

The electrostatic atomizer in the present embodiment is provided with an ultraviolet irradiating unit 50 configured to irradiate ultraviolet rays toward the tip side of the atomization unit 1 (i.e., a focus area of microwave electric field). For example, a mercury lamp, an ultraviolet irradiation LED, an ArF excimer laser or the like (193 nm wavelength) is employed as the ultraviolet irradiating unit 50. The circumference of the atomization unit 1 and the ultraviolet irradiating unit 50 is covered with an ultraviolet protection sheet (not shown) having a discharge hole for charged particulate water, as an ultraviolet prevention means.

At the tip part of the atomization unit 1, charged particulate water is produced by electrostatic atomization while ozone is also produced by discharge, but ultraviolet rays having 310 nm or less wavelength are irradiated to the ozone, thereby decomposing the ozone to produce hydroxy radicals.

Therefore, the ozone can be quickly decomposed immediately after the generation of the ozone, and the emission of the ozone to the exterior can be suppressed more effectively. Moreover, the produced hydroxy radicals are discharged as active ingredients along with the charged particulate water, and accordingly many active ingredients can be supplied toward an external target space.

By irradiation of ultraviolet rays having especially 254 nm wavelength, it is possible to most effectively decompose ozone to produce hydroxy radicals. Therefore, it is preferable that ultraviolet rays to be irradiated should include at least 254 nm wavelength.

Preferably, the ultraviolet irradiating unit 50 is configured to irradiate two kinds of ultraviolet rays such as ultraviolet rays having 254 nm wavelength and ultraviolet rays having 185 nm wavelength. By influence of the ultraviolet rays having 185 nm wavelength on air (oxygen), ozone is generated. Therefore, a mount of generation of ozone can be increased as a whole by irradiating the ultraviolet rays having 185 nm wavelength, and a larger amount of hydroxy radicals can be produced by further irradiating the ultraviolet rays having 254 nm wavelength.

In this instance, it is preferable that said two kinds of ultraviolet rays are irradiated to a predetermined region at the tip side of the atomization unit 1 at the same time, but may be alternately irradiated at short intervals.

Water molecules are necessary for production of hydroxy radicals through ozone decomposition by ultraviolet irradiation. The predetermined region is a region where charged particulate water is produced from liquid (L) and a large amount of moisture exists, and accordingly ozone is decomposed effectively.

As presented above, since the electrostatic atomizer of the embodiment comprises the ultraviolet irradiating unit 50 for irradiating ultraviolet rays toward the atomization unit 1, it is possible to decompose ozone produced by discharge immediately after the production of the ozone, and to produce hydroxy radicals.

In this instance, if ultraviolet rays to be irradiated are set to 310nm or less wavelength, ozone can be decomposed effectively. If the ultraviolet rays include at least 254nm wavelength, ozone can be decomposed more effectively. As a matter of course, the ultraviolet rays have 10 nm or more wavelength.

If the ultraviolet rays further include 185nm wavelength, ozone is generated by the ultraviolet rays having 185nm wavelength, and an amount of generation of ozone is increased as a whole. In addition, the ozone is decomposed by the ultraviolet rays having 254nm wavelength, and a large amount of hydroxy radicals as active constituents can be produced.

As a matter of course, each electrostatic atomizer in the first to fourth embodiments may comprise an ultraviolet irradiating unit 50 in the same way.

Although the present invention has been described with reference to certain preferred embodiments, numerous modifications and variations can be made by those skilled in the art without departing from the true spirit and scope of this invention, namely claims.

## Claims

1. An electrostatic atomizer, comprising:
an atomization unit comprising a microstrip line having first and second ends;
a microwave input unit configured to input a microwave signal to said first end; and
a liquid supply means configured to supply liquid to a side of said second end.

2. The electrostatic atomizer of claim 1,
wherein the atomization unit is an unit, in which a dielectric body is intervened between strip and earth conductors, constituting the microstrip line,
wherein the strip conductor of the microstrip line is provided from a side of one end to a side of other end of the atomization unit,
wherein the microwave input unit is configured to input the microwave signal to the first end of the microstrip line in said side of one end of the atomization unit,
wherein the liquid supply means is configured to supply the liquid to the second end of the microstrip line in said side of other end of the atomization unit, and
wherein the electrostatic atomizer is configured to apply a voltage to the liquid held by the atomization unit, thereby generating the charged particulate water from the liquid.

3. The electrostatic atomizer of claim 1 or 2, comprising, as the liquid supply means, a cooling unit configured to cool the dielectric body to produce dew condensation water.

4. The electrostatic atomizer of claim 1 or 2, comprising: an atomization unit cover positioned to surround the atomization unit; and a cooling unit configured to cool the atomization unit cover.

5. The electrostatic atomizer of any one of claims 1-4, comprising: a tubular unit through which the charged particulate water produced at the atomization unit can pass; and a temperature varying means configured to cool and then heat the tubular unit.

6. The electrostatic atomizer of any one of claims 1-5, comprising an ultraviolet irradiating unit configured to irradiate ultraviolet rays toward the atomization unit.

7. The electrostatic atomizer of claim 6, wherein the ultraviolet rays have 310 nm or less wavelength.

8. The electrostatic atomizer of claim 7, wherein the ultraviolet rays include at least 254 nm wavelength.

9. The electrostatic atomizer of claim 8, wherein the ultraviolet rays further include 185 nm wavelength.

10. The electrostatic atomizer of claim 7, wherein the ultraviolet rays include at least 193 nm wavelength.

11. The electrostatic atomizer of claim 1, wherein the microstrip line comprises:
a dielectric body having first and second surfaces;
a strip conductor in contact with the first surface of the dielectric body;
and
a ground plane conductor in contact with the second surface of the dielectric body.

12. The electrostatic atomizer of claim 1, wherein the dielectric body is in the shape of a hollow flat.
